# EUROPEAN PATENT APPLICATION

(11) **EP 4 631 795 A1**
(43) Date of publication of application: **15.10.2025**
(21) Application number: 23923654.0
(22) Date of filing: 24.08.2023
(51) Int. Cl.: B60R 16/03, H04L 67/12, H04L 67/06, G06F 8/65

(54) **VEHICLE POWER SUPPLY METHOD, DEVICE AND VEHICLE**

(30) Priority: 24.02.2023 CN 202310172331
(71) Applicant: Guangzhou Automobile Group Co., Ltd., Guangzhou, Guangdong 511434 (CN)
(72) Inventor: CHE, Long, Guangzhou, Guangdong 511434 (CN); WU, Huairen, Guangzhou, Guangdong 511434 (CN); LIU, Yuan, Guangzhou, Guangdong 511434 (CN); QUAN, Xiangtao, Guangzhou, Guangdong 511434 (CN)
(74) Representative: Metida
(86) International application number: PCT/CN2023/114791
(87) International publication number: WO 2024/174487

(57) **Abstract**

A vehicle power supply method and device, and a vehicle. The method comprises: in response to a software upgrading instruction, when performing software upgrading on a first group of non-CAN nodes among a plurality of nodes to be upgraded, controlling an engine to start, so as to enable the engine to charge a high-voltage battery and a storage battery; and in response to the completion of the charging of the high-voltage battery and the completion of the software upgrading of the first group of non-CAN nodes, shutting down the engine, when performing software upgrading on a first group of CAN nodes among the plurality of nodes to be upgraded, controlling the storage battery to provide electrical energy for the software upgrading of the first group of CAN nodes, and in case of a low State of Charge (SOC) of the storage battery, controlling the high-voltage battery to charge the storage battery. By means of the above-mentioned method, the operating time of the engine may be shortened, thereby reducing fuel consumption.

## Description

The present application claims the priority of the Chinese invention patent application with the invention name "VEHICLE POWER SUPPLY METHOD AND DEVICE, AND VEHICLE" submitted to the China Patent Office on February 24, 2023, application No. 202310172331.2, and the entire content of which is hereby incorporated by reference.

### TECHNICAL FIELD

The present application relates to the field technical of automobiles, and in particular, to a vehicle power supply method and device and a vehicle.

### BACKGROUND

With the development of vehicle technology, there are more and more types of vehicles. Based on energy supply modes of vehicles, vehicles may be roughly divided into the following types: battery electric vehicle, Hybrid Electric Vehicle (HEV), Plug-In Hybrid Electric Vehicle (PHEV), internal combustion engine vehicle, fuel cell electric vehicle, and extended range electric vehicle. In a related mode, when Over-The-Air Technology (OTA) upgrading is performed on a HEV, a power supply mode of the HEV is consistent with that of an internal combustion engine vehicle during OTA upgrading, resulting in high fuel consumption of the HEV.

### SUMMARY

In view of the above problems, a vehicle power supply method and device and a vehicle are proposed to reduce the above problems.

In a first aspect, the present application provides a vehicle power supply method, the method including: in response to a software upgrading instruction, when performing software upgrading on a first group of non-CAN nodes among a plurality of nodes to be upgraded, controlling an engine to start, so as to enable the engine to charge a high-voltage battery and a storage battery, where the storage battery is configured to provide electrical energy for the software upgrading of the first group of non-CAN nodes, and the high-voltage battery is configured to store electrical energy; and in response to the completion of the charging of the high-voltage battery and the completion of the software upgrading of the first group of non-CAN nodes, shutting down the engine, when performing software upgrading on a first group of CAN nodes among the plurality of nodes to be upgraded, controlling the storage battery to provide electrical energy for the software upgrading of the first group of CAN nodes, and in case of a low State of Charge (SOC) of the storage battery, controlling the high-voltage battery to charge the storage battery, where an SOC of the high-voltage battery after completion of charging is capable of supporting the completion of the software upgrading of the first group of CAN nodes.

In a second aspect, the present application provides a vehicle power supply device, the device including: a non-CAN node upgrading unit configured to: in response to a software upgrading instruction, when performing software upgrading on a first group of non-CAN nodes among a plurality of nodes to be upgraded, control an engine to start, so as to enable the engine to charge a high-voltage battery and a storage battery, where the storage battery is configured to provide electric energy for the software upgrading of the first group of non-CAN nodes, and the high-voltage battery is configured to store electric energy; and a CAN node upgrading unit configured to: in response to the completion of the charging of the high-voltage battery and the completion of the software upgrading of the first group of non-CAN nodes, shut down the engine, when performing software upgrading on a first group of CAN nodes among the plurality of nodes to be upgraded, control the storage battery to provide electric energy for the software upgrading of the first group of CAN nodes, and in case of a low SOC of the storage battery, control the high-voltage battery to charge the storage battery, where an SOC of the high-voltage battery after completion of charging is capable of supporting the completion of the software upgrading of the first group of CAN nodes.

In a third aspect, the present application provides a vehicle, including a processor and a memory, where one or more programs are stored in the memory and configured to be executed by the processor, and the one or more programs are configured to perform the above-mentioned method.

In a fourth aspect, the present application provides a computer-readable storage medium, where a program code stores in the computer-readable storage medium, and where the above-mentioned method is performed when the program code runs.

The present application provides a vehicle power supply method and device, a vehicle and a storage medium. The method includes: in response to a software upgrading instruction, when starting to perform software upgrading on a first group of non-CAN nodes among a plurality of nodes to be upgraded, controlling an engine to start, so as to enable the engine to charge a high-voltage battery for storing electrical energy and a storage battery for providing electrical energy for the software upgrading of the first group of non-CAN nodes; and in response to the completion of the charging of the high-voltage battery and the completion of the software upgrading of the first group of non-CAN nodes, shutting down the engine, performing software upgrading on a first group of CAN nodes among the plurality of nodes to be upgraded, controlling the storage battery to provide electrical energy for the software upgrading of the first group of CAN nodes, and in case of a low SOC of the storage battery, controlling the high-voltage battery to charge the storage battery, where an SOC of the high-voltage battery after completion of charging is capable of supporting the completion of the software upgrading of the first group of CAN nodes. By means of the above-mentioned method, when it is necessary to provide electric energy for the upgrading of a plurality of nodes to be upgraded, a group of non-CAN nodes may be upgraded first, and while the group of non-CAN nodes are being upgraded, the engine is controlled to charge a high-voltage battery and a storage battery and the engine is shut down after the charging is completed, such that after a group of non-CAN nodes are upgraded and when a group of CAN nodes are being upgraded, the storage battery may be charged based on the charged high-voltage battery, such that the storage battery may provide electric energy for the software upgrading of the group of CAN nodes, thereby shortening the operating time of the engine and then reducing fuel consumption.

### BRIEF DESCRIPTION OF THE DRAWINGS

In order to more clearly illustrate the technical solutions in the embodiments of the present application, the following will briefly introduce the accompanying drawings that need to be used in the description of the embodiments, and it is obvious that the accompanying drawings in the following description are only some of the embodiments of the present application, and that for the person of ordinary skill in the field, other accompanying drawings can be obtained according to these drawings, without creative labor.
Fig. 1 is a flow chart showing a vehicle power supply method provided in an embodiment of the present application;
Fig. 2 is a schematic diagram showing a method for controlling an engine to start provided in the present application;
Fig. 3 is a schematic diagram showing an engine charging a high-voltage battery and a storage battery provided in the present application;
Fig. 4 is a schematic diagram showing a method for controlling an engine to shut down provided in the present application;
Fig. 5 is a schematic diagram showing a method for power supply for a plurality of nodes during software upgrading provided in the present application;
Fig. 6 is a structural block diagram showing a vehicle power supply device provided in an embodiment of the present application;
Fig. 7 is a structural block diagram showing a vehicle provided in the present application; and
Fig. 8 shows a storage unit for storing or carrying a program code for implementing a vehicle power supply method according to an embodiment of the present application in an embodiment of the present application.

### DETAILED DESCRIPTION

The technical solutions in the embodiments of the present disclosure will be clearly and completely described as below with reference to the accompanying drawings in the embodiments of the present application. All other embodiments obtained by a person of ordinary skill in the art based on the embodiments of the present application without creative effort shall fall into the protection scope of the present application.

In an embodiment of the present application, the inventor proposes a vehicle power supply method and device and a vehicle. The method includes: in response to a software upgrading instruction, when starting to perform software upgrading on a first group of non-CAN nodes among a plurality of nodes to be upgraded, controlling an engine to start, so as to enable the engine to charge a high-voltage battery for storing electrical energy and a storage battery for providing electrical energy for the software upgrading of the first group of non-CAN nodes; and in response to the completion of the charging of the high-voltage battery and the completion of the software upgrading of the first group of non-CAN nodes, shutting down the engine, when performing software upgrading on a first group of CAN nodes among the plurality of nodes to be upgraded, controlling the storage battery to provide electrical energy for the software upgrading of the first group of CAN nodes, and in case of a low SOC of the storage battery, controlling the high-voltage battery to charge the storage battery, where an SOC of the high-voltage battery after completion of charging is capable of supporting the completion of the software upgrading of the first group of CAN nodes. By means of the above-mentioned method, when it is necessary to provide electrical energy for the upgrading of a plurality of nodes to be upgraded, a group of non-CAN nodes may be upgraded first, and while the group of non-CAN nodes are being upgraded, the engine is controlled to charge a high-voltage battery and a storage battery and the engine is shut down after the charging is completed, such that after a group of non-CAN nodes are upgraded and when a group of CAN nodes are being upgraded, the storage battery may be charged based on the charged high-voltage battery, such that the storage battery may provide electric energy for the software upgrading of the group of CAN nodes, thereby shortening the operating time of the engine and then reducing fuel consumption.

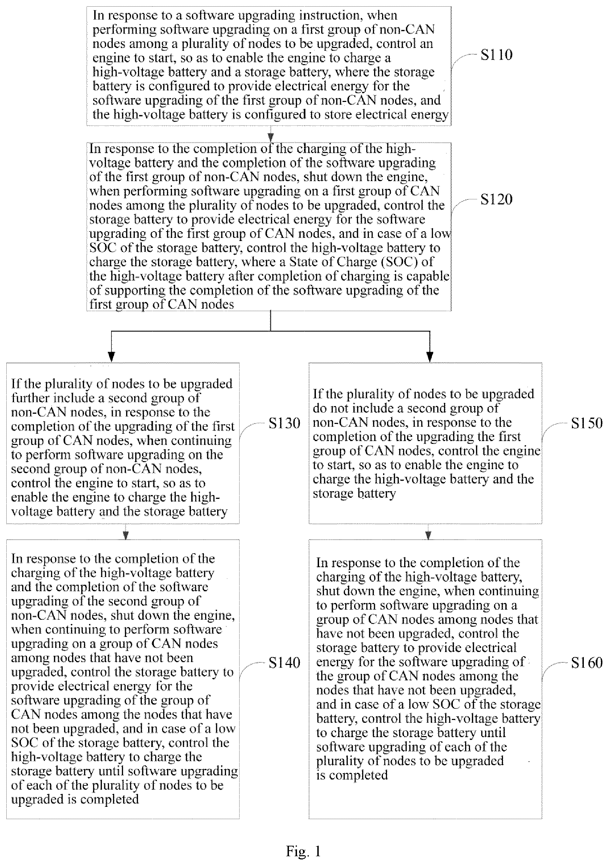

Please refer to Fig. 1, which shows a vehicle power supply method provided in the present application, the method including:
At S110, in response to a software upgrading instruction, when performing software upgrading on a first group of non-CAN nodes among a plurality of nodes to be upgraded, an engine is controlled to start, so as to enable the engine to charge a high-voltage battery and a storage battery, where the storage battery is configured to provide electrical energy for the software upgrading of the first group of non-CAN nodes, and the high-voltage battery is configured to store electrical energy.

In an embodiment of the present application, the vehicle may include a master node and a plurality of slave nodes, where the master node may be a FOTA Master (FOR Over-the-Air Technology Master, FOTA Master) node, the slave nodes may include one or more non-CAN (Controller Area Network, CAN) nodes and one or more CAN nodes, and the non-CAN node and CAN node may correspond to ONE ECU (Electronic Control Unit, ECU). The FOTA Master node may be used to perform software upgrading on the non-CAN node and the CAN node. A group of non-CAN/CAN nodes may include one or more non-CAN/CAN nodes, and the non-CAN nodes may refer to other types of nodes that have a different upgrading mode from the CAN nodes. For example, the non-CAN nodes may be Ethernet (ETH) nodes. The FOTA Master node upgrades the non-CAN nodes in a DoIP (Diagnostic communication over Internet Protocol, DoIP) mode. This upgrading mode is a point-to-point upgrading mode and does not require to issue that the entire vehicle is prohibited from applying message communication 28 service. Therefore, while the FOTA Master node is performing software upgrading on the non-CAN nodes, the engine may charge the high-voltage battery and storage battery. In the process in which the FOTA Master node upgrades a group of CAN nodes, there is a need to issue that entire vehicle is prohibited from applying message communication 28 service, and the engine needs message communication to charge the high-voltage battery and the storage battery. Therefore, in the process in which the FOTA Master node upgrades a group of CAN nodes, the engine cannot charge the high-voltage battery and the storage battery.

As a mode, when receiving a software upgrading instruction, the FOTA Master node may perform software upgrading on a group of non-CAN nodes among a plurality of nodes to be upgraded.

In an embodiment of the present application, the range of a State of Charge (SOC) of the high-voltage battery may be [A, B], where A may represent a first SOC threshold, which may be a minimum SOC value for normal operation of the high-voltage battery; and B may represent a second SOC threshold, which may be a maximum SOC value for normal operation of the high-voltage battery. In order to extend the service life of the high-voltage battery, the high-voltage battery will usually not be fully charged, and will not be discharged to provide electric energy to other components when the SOC is lower than the first SOC threshold. For example, the first SOC threshold may be 30% and the second SOC threshold may be 70%.

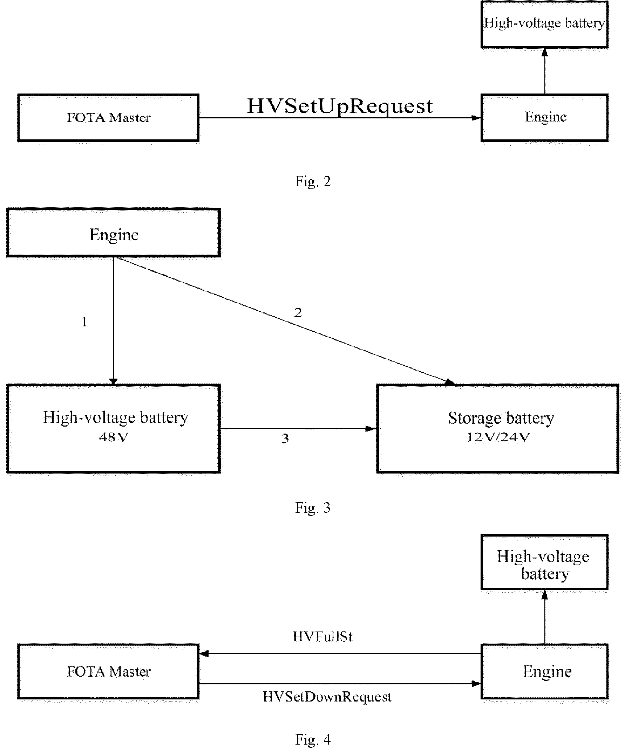

As a mode, as shown in Fig. 2, in response to a software upgrading instruction, when the FOTA Master node performs software upgrading on a first group of non-CAN nodes among a plurality of nodes to be upgraded, the engine is controlled to start through a high-voltage loading signal (for example: HVSetUpRequest), so as to enable the engine to charge a high-voltage battery and a storage battery when a current SOC of the high-voltage battery is less than a second SOC threshold, such that the SOC of the high-voltage battery reaches the second SOC threshold.

Optionally, the FOTA Master node may send a high-voltage loading signal to a Body Control Module (BCM), and the BCM may start the engine after receiving the high-voltage loading signal.

Optionally, the high-voltage loading signal may be a CAN signal.

In an embodiment of the present application, as shown in Fig. 3, when the engine is started, the engine may charge the high-voltage battery and the storage battery through a line 1 and a line 2 respectively, in this case, the current generated by the engine will be higher than the output current of the high-voltage battery, and according to the current absorption principle, a line 3 cannot output current at this time; and when the engine is shut down, the high-voltage battery may charge the storage battery through the line 3.

Optionally, the time required for the engine to charge the high-voltage battery in SOC from the first SOC threshold to the second SOC threshold may be equal to the time required for upgrading a group of non-CAN nodes.

Optionally, a charging speed of the engine may be controlled based on the time required for upgrading a group of non-CAN nodes, such that the time required for the engine to charge the high-voltage battery in SOC from the first SOC threshold to the second SOC threshold may be equal to the time required for upgrading a group of non-CAN nodes.

In an embodiment of the present application, by controlling the time required for the engine to charge the high-voltage battery in SOC from the first SOC threshold to the second SOC threshold to be equal to the time required for upgrading a group of non-CAN nodes, the upgrading of a group of CAN nodes may be started immediately after the upgrading of a group of non-CAN nodes is completed, such that the FOTA Master node may continuously and uninterruptedly upgrade a plurality of nodes to be upgraded, thereby improving the upgrading efficiency and accurately controlling the upgrading duration.

Optionally, the time required for the engine to charge the high-voltage battery in SOC from the first SOC threshold to the second SOC threshold may be different from the time required for upgrading a group of non-CAN nodes.

In an embodiment of the present application, if the time required for the engine to charge the high-voltage battery in SOC from the first SOC threshold to the second SOC threshold is not equal to the time required for upgrading a group of non-CAN nodes, the upgrading time may be calculated based on the longer one of the above two times, such that the upgrading duration is also controllable.

Optionally, the time required for upgrading a group of non-CAN nodes may be related to the current network status and the size of an upgrade data packet.

Optionally, the second SOC threshold may be determined based on at least one of the usage duration, current, battery capacity, temperature, and attenuation factor of the high-voltage battery.

At S120, in response to the completion of the charging of the high-voltage battery and the completion of the software upgrading of the first group of non-CAN nodes, the engine is shut down, when performing software upgrading on a first group of CAN nodes among the plurality of nodes to be upgraded, the storage battery is controlled to provide electric energy for the software upgrading of the first group of CAN nodes, and in case of a low SOC of the storage battery, the high-voltage battery is controlled to charge the storage battery, where an SOC of the high-voltage battery after completion of charging is capable of supporting the completion of the software upgrading of the first group of CAN nodes.

As a mode, if receiving a charging completion feedback signal sent by the engine, the FOTA Master node may confirm that the charging of the high-voltage battery is completed; and in response to the completion of the charging the of high-voltage battery and the completion of the software upgrading of the first group of non-CAN nodes, the FOTA Master node may shut down the engine through a high-voltage unloading signal, control the storage battery to provide electric energy for the software upgrading of the first group of CAN nodes when performing software upgrading on a first group of CAN nodes among the plurality of nodes to be upgraded, and control the high-voltage battery to charge the storage battery in case of a low SOC of the storage battery.

Optionally, as shown in Fig. 4, when the engine charges the high-voltage battery from the current SOC to the second SOC threshold, the engine may send a charging completion feedback signal (for example: HVFullSt) to the FOTA Master node through a CAN bus, and after receiving the HVFullSt signal, the FOTA Master node may shut down the engine through a high-voltage unloading signal (for example: HVSetDownRequest).

Optionally, the charging completion feedback signal and the high-voltage unloading signal may be CAN signals.

Optionally, the FOTA Master node may periodically acquire the charging completion feedback signal, the acquisition time period being related to a vehicle model, for example, acquire the charging completion feedback signal once every twenty minutes.

Optionally, when the SOC of the high-voltage battery is the second SOC threshold, the remaining available SOC of the high-voltage battery may be an integer multiple of the SOC required for upgrading a group of CAN nodes, and the remaining available SOC may be a difference between the second SOC threshold and the first SOC threshold.

For example, the first SOC threshold of the high-voltage battery may be 30%, and the second SOC threshold may be 70%. When the SOC of the high-voltage battery drops from 70% to 30%, a group of CAN nodes (the group of CAN nodes may include three CAN nodes) may be upgraded.

At S130, if the plurality of nodes to be upgraded further include a second group of non-CAN nodes, in response to the completion of the upgrading of the first group of CAN nodes, when continuing to perform software upgrading on the second group of non-CAN nodes, the engine is controlled to start, so as to enable the engine to charge the high-voltage battery and the storage battery.

As a mode, if the plurality of nodes to be upgraded further include a second group of non-CAN nodes, in response to the completion of the upgrading of the first group of CAN nodes, the FOTA Master node may control the engine to start again when continuing to perform software upgrading on the second group of non-CAN nodes, so as to enable the engine to charge the high-voltage battery and the storage battery again.

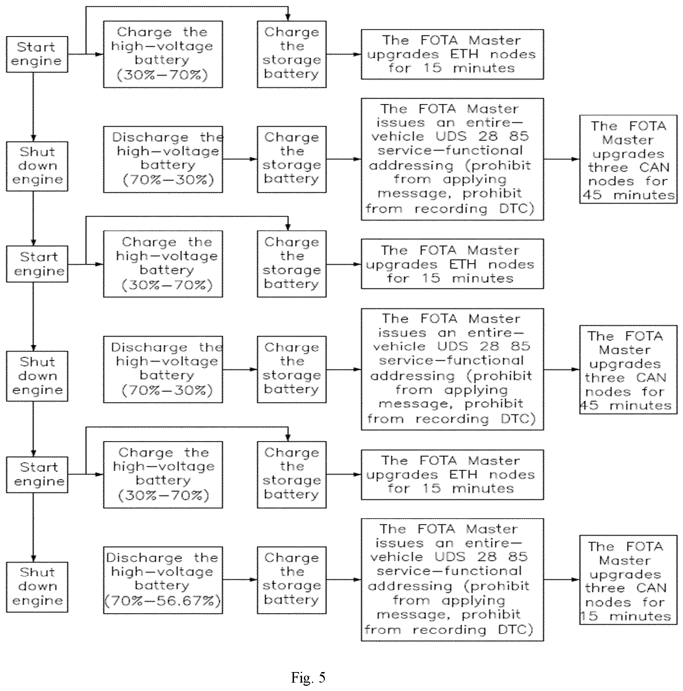

Taking the case where all non-CAN nodes are Ethernet nodes as an example, as shown in Fig. 5, the displacement of a hybrid electric vehicle may be 1.6L, the SOC of the high-voltage battery may be 1.5KWh, the first SOC threshold of the high-voltage battery may be 30%, the second SOC threshold may be 70%, and the current SOC of the high-voltage battery may be 30%. The hybrid electric vehicle may have ten slave nodes that need software upgrading, and the time required for upgrading each slave node may be 15 minutes. The ten slave nodes may include three groups of non-CAN nodes, each group of non-CAN nodes may include one non-CAN node and three groups of CAN nodes, the first two groups of CAN nodes may each include three CAN nodes, and the third group of CAN nodes may include one CAN node. If the time required for the engine to charge the high-voltage battery in SOC from 30% to 70% may also be 15 minutes, 40% of the SOC of the high-voltage battery may support the storage battery to run at an idle speed for 45 minutes, and three CAN nodes may be upgraded. That is to say, if the engine is started for 5 minutes, the storage battery may be supported to run at an idle speed for 15 minutes, and one CAN node may be upgraded.

The FOTA Master node may first spend 15 minutes upgrading the first group of non-CAN nodes based on step S110, and control the engine to start while upgrading the group of non-CAN nodes, such that the engine spends 15 minutes charging the storage battery and charging the high-voltage battery in SOC from 30% to 70%; and in 15 minutes, if the upgrading of the group of non-CAN nodes is completed and the charging of the high-voltage battery is completed, then the FOTA Master node may spend 45 minutes upgrading the first group of CAN nodes based on step S120. After completing the upgrading of the first group of CAN nodes, if the SOC of the high-voltage battery drops from 70% to 30%, and there are two groups of non-CAN nodes and two groups of CAN nodes in nodes that have not been upgraded, then the FOTA Master node may continue to upgrade the second group of non-CAN nodes among the nodes that have not been upgraded based on step S130, and control the engine to start while upgrading the group of non-CAN nodes, such that the engine spends 15 minutes charging the storage battery and charging the high-voltage battery in SOC from 30% to 70%.

At S140, in response to the completion of the charging of the high-voltage battery and the completion of the software upgrading of the second group of non-CAN nodes, the engine is shut down, when continuing to perform software upgrading on a group of CAN nodes among nodes that have not been upgraded, the storage battery is controlled to provide electric energy for the software upgrading of the group of CAN nodes among the nodes that have not been upgraded, and in case of low battery level of the storage battery, the high-voltage battery is controlled to charge the storage battery until software upgrading of each of the plurality of nodes to be upgraded is completed.

As a mode, the FOTA Master node may shut down the engine in response to the completion of the charging of the high-voltage battery and the completion of the software upgrading of the second group of non-CAN nodes among the nodes that have not been software-upgraded, when continuing to perform software upgrading on a group of CAN nodes among nodes that have not been upgraded, control the storage battery to provide electric energy for the software upgrading of the group of CAN nodes among the nodes that have not been upgraded, and in case of low SOC of the storage battery, control the high-voltage battery to charge the storage battery until software upgrading of each of the plurality of nodes to be upgraded is completed.

For example, please continue to refer to Fig. 5, after the FOTA Master node completes the upgrading of the second group of non-CAN nodes based on step S130, if there are one group of non-CAN nodes and two groups of CAN nodes in the nodes that have not been upgraded, then the FOTA Master node may continue to upgrade the second group of CAN nodes among the nodes that have not been upgraded based on step S140 for 45 minutes. After completing the upgrading of the second group of CAN nodes again, if the SOC of the high-voltage battery drops from 70% to 30%, and there is one group of non-CAN nodes and one group of CAN nodes in the nodes that have not been upgraded, then the FOTA Master node may continue to upgrade the last group of non-CAN nodes for 15 minutes, and control the engine to start while upgrading the group of non-CAN nodes, so as to enable the engine to charge the storage battery and charge the high-voltage battery in SOC from 30% to 70%. In this case, if there is only the third group of CAN nodes in the nodes that have not been upgraded, then the FOTA Master node continues to upgrade the group of CAN nodes, such that software upgrading of each of the plurality of nodes to be upgraded is completed.

Based on the examples in step S130 and step S140, it can be known that when ten nodes of the hybrid electric vehicle are upgraded completely in the same upgrading mode as an internal combustion engine vehicle, the engine needs to operate for 150 minutes, that is, 2.5 hours. When the idle speed is 1000 rpm, the fuel consumption of the engine is about 2.4L, which is equivalent to the fuel consumption of the engine of about 1L per hour. If ten nodes of the hybrid electric vehicle are upgraded using the vehicle power supply method provided in the present application, the operating time of the engine is 45 minutes, and the fuel consumption is 0.8L, which saves about 66% of the fuel consumption compared to 2.4L, and does not increase the time required for upgrading.

At S150, if the plurality of nodes to be upgraded do not include a second group of non-CAN nodes, in response to the completion of the upgrading the first group of CAN nodes, the engine is controlled to start, so as to enable the engine to charge the high-voltage battery and the storage battery.

As a mode, if the plurality of nodes to be upgraded do not include a second group of non-CAN nodes, that is, all non-CAN nodes among the plurality of nodes to be upgraded belong to the first group of non-CAN nodes, the FOTA Master node controls the engine to start in response to the completion of the upgrading of the first group of CAN nodes, so as to enable the engine to charge the high-voltage battery and the storage battery.

For example, the displacement of a hybrid electric vehicle may be 1.6L, the SOC of the high-voltage battery may be 1.5KWh, the first SOC threshold of the high-voltage battery may be 30%, the second SOC threshold may be 70%, and the current SOC of the high-voltage battery may be 30%. The hybrid electric vehicle may have seven slave nodes that need software upgrading, and the time required for upgrading each node may be 15 minutes. The seven slave nodes may include one group of non-CAN nodes and two groups of CAN nodes, the one group of non-CAN nodes may include one non-CAN node, each group of CAN nodes may include three CAN nodes, and the time required for upgrading each node may be 15 minutes. If the time required for the engine to charge the high-voltage battery in SOC from 30% to 70% may also be 15 minutes, 40% of the SOC of the high-voltage battery may support the storage battery to run at an idle speed for 45 minutes, and three CAN nodes may be upgraded. That is to say, if the engine is started for five minutes, the storage battery may be supported to run at an idle speed for 15 minutes, and one CAN node may be upgraded.

The FOTA Master node may first spend 15 minutes upgrading the first group of non-CAN nodes based on step S110, and control the engine to start while upgrading the group of non-CAN nodes, such that the engine spends 15 minutes charging the storage battery and charging the high-voltage battery in SOC from 30% to 70%; and in 15 minutes, if the upgrading of the group of non-CAN nodes is completed and the charging of the high-voltage battery is completed, then the FOTA Master node may spend 45 minutes upgrading a group of CAN nodes based on step S120. After completing the upgrading of the group of CAN nodes, if the SOC of the high-voltage battery drops from 70% to 30%, and there is only one group of CAN nodes in nodes that have not been upgraded, then the FOTA Master node may control the engine to start based on step S140, such that the engine spends 15 minutes charging the storage battery and charging the high-voltage battery in SOC from 30% to 70%.

At S160, in response to the completion of the charging of the high-voltage battery, the engine is shut down, when continuing to perform software upgrading on a group of CAN nodes among nodes that have not been upgraded, the storage battery is controlled to provide electrical energy for the software upgrading of the group of CAN nodes among the nodes that have not been upgraded, and in case of a low SOC of the storage battery, the high-voltage battery is controlled to charge the storage battery until software upgrading of each of the plurality of nodes to be upgraded is completed.

As a mode, the FOTA Master node may shut down the engine in response to the completion of the charging of the high-voltage battery, control the storage battery to provide electrical energy for the software upgrading of a group of CAN nodes among nodes that have not been upgraded when continuing to perform software upgrading on the group of CAN nodes among the nodes that have not been upgraded, and in case of a low SOC of the storage battery, control the high-voltage battery to charge the storage battery until software upgrading of each of the plurality of nodes to be upgraded is completed.

For example, after the charging of the high-voltage battery is completed based on step S150, if there is only one group of CAN nodes in the nodes that have not been upgraded, then the FOTA Master node may continue to upgrade the group of CAN nodes among the nodes that have not been upgraded based on step S160 for 45 minutes, such that software upgrading of each of the plurality of nodes to be upgraded is completed.

In an embodiment of the present application, by controlling the duration for the engine to charge the high-voltage battery and adjusting the second SOC threshold of the high-voltage battery, the vehicle power supply method provided in the present application may be deployed on different types of hybrid electric vehicles, thereby increasing the applicability and flexibility of the vehicle power supply method provided in the present application.

The present embodiment provides a vehicle power supply method, including: in response to a software upgrading instruction, when starting to perform software upgrading on a first group of non-CAN nodes among a plurality of nodes to be upgraded, controlling an engine to start, so as to enable the engine to charge a high-voltage battery for storing electric energy and a storage battery for providing electric energy for the software upgrading of the first group of non-CAN nodes; and in response to the completion of the charging of the high-voltage battery and the completion of the software upgrading of the first group of non-CAN nodes, shutting down the engine, when performing software upgrading on a first group of CAN nodes among the plurality of nodes to be upgraded, controlling the storage battery to provide electric energy for the software upgrading of the first group of CAN nodes, and in case of a low SOC of the storage battery, controlling the high-voltage battery to charge the storage battery, where an SOC of the high-voltage battery after completion of charging is capable of supporting the completion of the software upgrading of the first group of CAN nodes. By means of the above-mentioned method, when it is necessary to provide electric energy for the upgrading of a plurality of nodes to be upgraded, a group of non-CAN nodes may be upgraded first, and while the group of non-CAN nodes are being upgraded, the engine is controlled to charge a high-voltage battery and a storage battery and the engine is shut down after the charging is completed, such that after a group of non-CAN nodes are upgraded and when a group of CAN nodes are being upgraded, the storage battery may be charged based on the charged high-voltage battery, such that the storage battery may provide electric energy for the software upgrading of the group of CAN nodes, thereby shortening the operating time of the engine and then reducing fuel consumption.

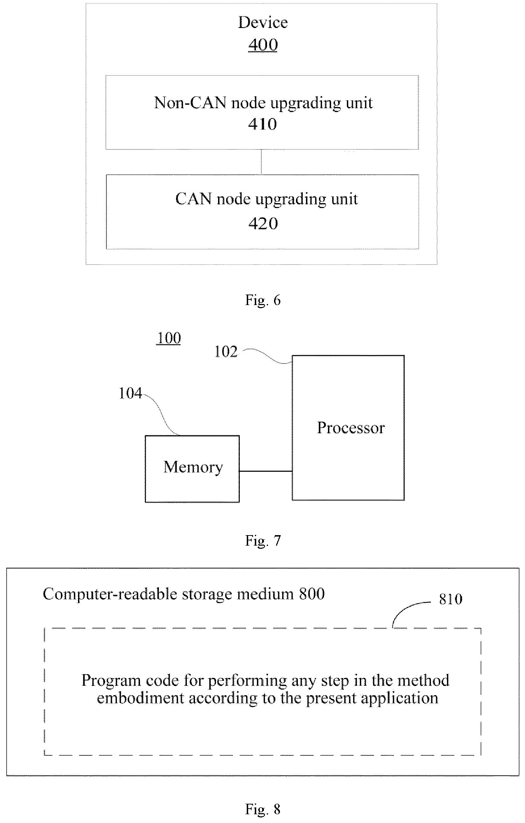

Please refer to Fig. 6, which shows a vehicle power supply device 400 provided in the present application, the device 400 including:
a non-CAN node upgrading unit 410 configured to: in response to a software upgrading instruction, when performing software upgrading on a first group of non-CAN nodes among a plurality of nodes to be upgraded, control an engine to start, so as to enable the engine to charge a high-voltage battery and a storage battery, where the storage battery is configured to provide electrical energy for the software upgrading of the first group of non-CAN nodes, and the high-voltage battery is configured to store electrical energy; and
a CAN node upgrading unit 420 configured to: in response to the completion of the charging of the high-voltage battery and the completion of the software upgrading of the first group of non-CAN nodes, shut down the engine, when performing software upgrading on a first group of CAN nodes among the plurality of nodes to be upgraded, control the storage battery to provide electric energy for the software upgrading of the first group of CAN nodes, and in case of a low SOC of the storage battery, control the high-voltage battery to charge the storage battery, where an SOC of the high-voltage battery after completion of charging is capable of supporting the completion of the software upgrading of the first group of CAN nodes.

As a mode, if the plurality of nodes to be upgraded further include a second group of non-CAN nodes, the non-CAN node upgrading unit 410 is specifically configured to: control the engine to start in response to the completion of the upgrading of the first group of CAN nodes when continuing to perform software upgrading on the second group of non-CAN nodes, so as to enable the engine to charge the high-voltage battery and the storage battery. The CAN node upgrading unit 420 is specifically configured to: shut down the engine in response to the completion of the charging of the high-voltage battery and the completion of the software upgrading of the second group of non-CAN nodes; when continuing to perform software upgrading on a group of CAN nodes among nodes that have not been upgraded, control the storage battery to provide electric energy for software upgrading of the group of CAN nodes among the nodes that have not been upgraded; and in case of a low SOC of the storage battery, control the high-voltage battery to charge the storage battery until software upgrading of each of the plurality of nodes to be upgraded is completed.

As a mode, if the plurality of nodes to be upgraded do not include a second group of non-CAN nodes, the CAN node upgrading unit 420 is specifically configured to: control the engine to start in response to the completion of the upgrading the first group of CAN nodes, so as to enable the engine to charge the high-voltage battery and the storage battery; and shut down the engine in response to the completion of the charging of the high-voltage battery, when continuing to perform software upgrading on a group of CAN nodes among nodes that have not been upgraded, control the storage battery to provide electric energy for the software upgrading of the group of CAN nodes among the nodes that have not been upgraded, and in case of a low SOC of the storage battery, control the high-voltage battery to charge the storage battery until software upgrading of each of the plurality of nodes to be upgraded is completed.

As a mode, the non-CAN node upgrading unit 410 is specifically configured to: in response to a software upgrading instruction, when performing software upgrading on the first group of non-CAN nodes among the plurality of nodes to be upgraded, control the engine to start through a high-voltage loading signal, so as to enable the engine to charge the high-voltage battery and the storage battery when a current SOC of the high-voltage battery is less than a second SOC threshold, such that the SOC of the high-voltage battery reaches the second SOC threshold.

As a mode, the CAN node upgrading unit 420 is specifically configured to: confirm that the charging of the high-voltage battery is completed if a charging completion feedback signal sent by the engine is received; and shut down the engine through a high-voltage unloading signal in response to the completion of the charging of the high-voltage battery and the completion of the software upgrading of the first group of non-CAN nodes.

Optionally, the time required to charge the high-voltage battery in SOC from the first SOC threshold to the second SOC threshold is equal to the time required for upgrading the group of non-CAN nodes, the first SOC threshold is a minimum SOC value for normal operation of the high-voltage battery, and the second SOC threshold is a maximum SOC value for normal operation of the high-voltage battery.

Optionally, when the SOC of the high-voltage battery is the second SOC threshold, the remaining available SOC of the high-voltage battery is an integer multiple of the SOC required for upgrading the group of CAN nodes, and the remaining available SOC is a difference between the second SOC threshold and the first SOC threshold.

Optionally, the second SOC threshold is determined based on at least one of the usage duration, current, battery capacity, temperature, and attenuation factor of the high-voltage battery.

A vehicle provided in the present application will be described below with reference to Fig. 7.

Please refer to Fig. 7, based on the above-mentioned vehicle power supply method and device, an embodiment of the present application further provides another vehicle 100 capable of performing the above-mentioned vehicle power supply method. The vehicle 100 includes one or more (only one is shown) processors 102 and a memory 104 coupled to each other. The memory 104 stores a program capable of executing the contents of the aforementioned embodiments, and the processor 102 may execute the program stored in the memory 104.

The processor 102 may include one or more processor cores. The processor 102 utilizes various interfaces and lines to connect various parts within the entire vehicle 100, and performs various functions of the vehicle 100 and processes data by running or executing instructions, programs, code sets or instruction sets stored in the memory 104 and invoking data stored in the memory 104. Optionally, the processor 102 may be implemented in at least one hardware form of digital signal processing (DSP), field-programmable gate array (FPGA) and programmable logic array (PLA). The processor 102 may be integrated with one or a combination of a central processing unit (CPU), a graphics processing unit (GPU) and a modem, where the CPU mainly processes an operating system, a user interface, an application program, etc.; the GPU is responsible for rendering and drawing display contents; and the modem is used to handle wireless communications. It is understandable that the above-mentioned modem may not be integrated into the processor 102, but may be implemented separately through a communication chip.

The memory 104 may include a Random Access Memory (RAM) or may include a Read-Only Memory (ROM). The memory 104 may be used to store instructions, programs, codes, code sets, or instruction sets. The memory 104 may include a program storage area and a data storage area, where the program storage area may store instructions for implementing the operating system, instructions for implementing at least one function (such as a touch function, a sound playback function, an image playback function, etc.), instructions for implementing the following method embodiments, etc. The data storage area may also store data created by a terminal 200 during use (such as a phone book, audio and video data, chat record data, etc.).

Please refer to Fig. 8, which shows a structural block diagram of a computer-readable storage medium provided in an embodiment of the present application. The computer-readable storage medium 800 stores program codes, which may be invoked by a processor to perform the method described in the above-mentioned method embodiment.

The computer-readable storage medium 800 may be an electronic memory such as a flash memory, an EEPROM (Electrically Erasable Programmable Read Only Memory), an EPROM, a hard disk, or an ROM. Optionally, the computer-readable storage medium 800 includes a non-transitory computer-readable storage medium. The computer-readable storage medium 800 has a storage space for program codes 810 for performing any method step in the above-described method. The program codes may be read from or written into one or more computer program products. The program codes 810 may be compressed, for example, in a suitable form.

In summary, the present application provides a vehicle power supply method and device and a vehicle. The method includes: in response to a software upgrading instruction, when starting to perform software upgrading on a first group of non-CAN nodes among a plurality of nodes to be upgraded, controlling an engine to start, so as to enable the engine to charge a high-voltage battery for storing electrical energy and a storage battery for providing electrical energy for the software upgrading of the first group of non-CAN nodes; and in response to the completion of the charging of the high-voltage battery and the completion of the software upgrading of the first group of non-CAN nodes, shutting down the engine, when performing software upgrading on a first group of CAN nodes among the plurality of nodes to be upgraded, controlling the storage battery to provide electrical energy for the software upgrading of the first group of CAN nodes, and in case of a low SOC of the storage battery, controlling the high-voltage battery to charge the storage battery, where an SOC of the high-voltage battery after completion of charging is capable of supporting the completion of the software upgrading of the first group of CAN nodes. By means of the above-mentioned method, when it is necessary to provide electric energy for the upgrading of a plurality of nodes to be upgraded, a group of non-CAN nodes may be upgraded first, and while the group of non-CAN nodes are being upgraded, the engine is controlled to charge the high-voltage battery and the storage battery and the engine is shut down after the charging is completed, such that after a group of non-CAN nodes are upgraded and when a group of CAN nodes are being upgraded, the storage battery may be charged based on the charged high-voltage battery, such that the storage battery may provide electric energy for the software upgrading of a group of CAN nodes, thereby shortening the operating time of the engine and then reducing fuel consumption.

It should be noted finally that: the above embodiments are only intended to illustrate the technical solutions of the present application, but are not intended to limit same. Although the present application has been described in detail with reference to the foregoing embodiments, those skilled in the art will understand that they can still modify the technical solutions recorded in the aforementioned embodiments or replace some of the technical features therein with equivalent features. Such modifications or replacements do not drive the essence of the corresponding technical solutions to deviate from the gist and scope of the technical solutions of various embodiments of the present application.

## Claims

1. A vehicle power supply method, **characterized by** comprising:
in response to a software upgrading instruction, when performing software upgrading on a first group of non-CAN nodes among a plurality of nodes to be upgraded, controlling an engine to start, so as to enable the engine to charge a high-voltage battery and a storage battery, wherein the storage battery is configured to provide electrical energy for the software upgrading of the first group of non-CAN nodes, and the high-voltage battery is configured to store electrical energy; and
in response to the completion of the charging of the high-voltage battery and the completion of the software upgrading of the first group of non-CAN nodes, shutting down the engine, when performing software upgrading on a first group of CAN nodes among the plurality of nodes to be upgraded, controlling the storage battery to provide electrical energy for the software upgrading of the first group of CAN nodes, and in case of a low State of Charge (SOC) of the storage battery, controlling the high-voltage battery to charge the storage battery, wherein an SOC of the high-voltage battery after completion of charging is capable of supporting the completion of the software upgrading of the first group of CAN nodes.

2. The method according to claim 1, wherein if the plurality of nodes to be upgraded further comprise a second group of non-CAN nodes, the method further comprises:
in response to the completion of the upgrading of the first group of CAN nodes, when continuing to perform software upgrading on the second group of non-CAN nodes, controlling the engine to start, so as to enable the engine to charge the high-voltage battery and the storage battery; and
in response to the completion of the charging of the high-voltage battery and the completion of the software upgrading of the second group of non-CAN nodes, shutting down the engine, when continuing to perform software upgrading on a group of CAN nodes among nodes that have not been upgraded, controlling the storage battery to provide electrical energy for the software upgrading of the group of CAN nodes among the nodes that have not been upgraded, and in case of a low SOC of the storage battery, controlling the high-voltage battery to charge the storage battery until software upgrading of each of the plurality of nodes to be upgraded is completed.

3. The method according to claim 1, wherein if the plurality of nodes to be upgraded do not comprise a second group of non-CAN nodes, the method further comprises:
in response to the completion of the upgrading of the first group of CAN nodes, controlling the engine to start, so as to enable the engine to charge the high-voltage battery and the storage battery; and
in response to the completion of the charging of the high-voltage battery, shutting down the engine, when continuing to perform software upgrading on a group of CAN nodes among nodes that have not been upgraded, controlling the storage battery to provide electrical energy for the software upgrading of the group of CAN nodes among the nodes that have not been upgraded, and in case of a low SOC of the storage battery, controlling the high-voltage battery to charge the storage battery until software upgrading of each of the plurality of nodes to be upgraded is completed.

4. The method according to claim 1, wherein the time required to charge the high-voltage battery in SOC from a first SOC threshold to a second SOC threshold is equal to the time required for upgrading the group of non-CAN nodes, the first SOC threshold is a minimum SOC value for normal operation of the high-voltage battery, and the second SOC threshold is a maximum SOC value for normal operation of the high-voltage battery.

5. The method according to claim 4, wherein when the SOC of the high-voltage battery is the second SOC threshold, a remaining available SOC of the high-voltage battery is an integer multiple of the SOC required for upgrading the group of CAN nodes, and the remaining available SOC is a difference between the second SOC threshold and the first SOC threshold.

6. The method according to claim 4, wherein the second SOC threshold is determined based on at least one of the usage duration, current, battery capacity, temperature, and attenuation factor of the high-voltage battery.

7. The method according to claim 1, wherein the in response to a software upgrading instruction, when performing software upgrading on a first group of non-CAN nodes among a plurality of nodes to be upgraded, controlling an engine to start, so as to enable the engine to charge a high-voltage battery and a storage battery comprises:
in response to a software upgrading instruction, when performing software upgrading on the first group of non-CAN nodes among the plurality of nodes to be upgraded, controlling the engine to start through a high-voltage loading signal, so as to enable the engine to charge the high-voltage battery and the storage battery when a current SOC of the high-voltage battery is less than a second SOC threshold, such that the SOC of the high-voltage battery reaches the second SOC threshold.

8. The method according to claim 1, wherein the in response to the completion of the charging the high-voltage battery and the completion of the software upgrading of the first group of non-CAN nodes, shutting down the engine comprises:
if a charging completion feedback signal sent by the engine is received, confirming that the charging of the high-voltage battery is completed; and
in response to the completion of the charging of the high-voltage battery and the completion of the software upgrading of the first group of non-CAN nodes, shutting down the engine through a high-voltage unloading signal.

9. A vehicle power supply device, **characterized by** comprising:
a non-CAN node upgrading unit configured to: in response to a software upgrading instruction, when performing software upgrading on a first group of non-CAN nodes among a plurality of nodes to be upgraded, control an engine to start, so as to enable the engine to charge a high-voltage battery and a storage battery, wherein the storage battery is configured to provide electric energy for the software upgrading of the first group of non-CAN nodes, and the high-voltage battery is configured to store electric energy; and
a CAN node upgrading unit configured to: in response to the completion of the charging of the high-voltage battery and the completion of the software upgrading of the first group of non-CAN nodes, shut down the engine, when performing software upgrading on a first group of CAN nodes among the plurality of nodes to be upgraded, control the storage battery to provide electric energy for the software upgrading of the first group of CAN nodes, and in case of a low SOC of the storage battery, control the high-voltage battery to charge the storage battery, wherein an SOC of the high-voltage battery after completion of charging is capable of supporting the completion of the software upgrading of the first group of CAN nodes.

10. A vehicle, **characterized by** comprising a processor and a memory, wherein:
one or more programs are stored in the memory and configured to be executed by the processor, and the one or more programs are configured to perform the method of any one of claims 1 to 8.

11. A computer-readable storage medium, **characterized in that** a program code is stored in the computer-readable storage medium, wherein the method of any one of claims 1 to 8 is performed when the program code runs.
